# FASCICULE DE BREVET EUROPEEN

(11) **EP 3 073 147 B1**
(45) Date de publication et mention de la délivrance du brevet: **29.04.2020**
(21) Numéro de dépôt: 16158194.7
(22) Date de dépôt: 02.03.2016
(51) Int. Cl.: F16F 15/14

(54) **DISPOSITIF D'AMORTISSEMENT D'OSCILLATIONS DE TORSION POUR SYSTEME DE TRANSMISSION DE VEHICULE**
VORRICHTUNG ZUR TORSIONSSCHWINGUNGSDÄMPFUNG FÜR DAS ANTRIEBSSYSTEM EINES FAHRZEUGS
DEVICE FOR DAMPING TORSIONAL OSCILLATIONS IN A VEHICLE TRANSMISSION SYSTEM

(30) Priorité: 16.03.2015 FR 1552138
(43) Date de publication de la demande: 28.09.2016
(73) Titulaire: Valeo Embrayages, 80009 Amiens Cedex 2 (FR)
(72) Inventeur: DAST, Pascal, 80750 FIENVILLERS (FR)
(74) Mandataire: Vincent, Catherine Marie Marguerite

(56) Documents cités:
- EP-A2- 1 744 074
- EP-A2- 2 743 541
- WO-A1-2013/057440
- WO-A1-2013/135468
- DE-A1-102009 042 836
- DE-A1-102011 012 276
- DE-A1-102014 205 045

## Description

La présente invention concerne un dispositif d'amortissement d'oscillations de torsion pour système de transmission de véhicule.

L'invention s'applique notamment, mais non exclusivement, aux véhicules dits industriels, ces derniers étant par exemple des poids lourds, des véhicules de transport en commun, ou des véhicules agricoles.

L'invention peut également s'appliquer aux véhicules dits passagers.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les oscillations de torsion dues aux acyclismes du moteur. De tels dispositifs sont décrits, par exemple, dans les documents EP1744074 et WO2013/135468.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en œuvre un support et un ou plusieurs corps pendulaires mobiles par rapport à ce support, le déplacement par rapport au support des corps pendulaires étant guidé par des organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Le dispositif d'amortissement d'oscillations de torsion est généralement fixé via le support sur un élément du système de transmission. Cet élément peut être un moyeu, un flasque ou une rondelle, par exemple. La fixation du dispositif d'amortissement d'oscillations de torsion impose de prévoir un support de dimension radiale relativement important, de manière à ce qu'une partie de ce support soit dédiée à la fixation du dispositif sur le système de transmission. Or, une telle dimension génère un encombrement et rend ainsi plus difficile l'implantation du dispositif d'amortissement d'oscillations de torsion au sein du système de transmission.

L'invention a pour but de faciliter l'implantation d'un dispositif d'amortissement d'oscillations de torsion au sein d'un système de transmission, et elle y parvient, selon l'un de ses aspects, à l'aide d'un dispositif d'amortissement d'oscillations de torsion pour système de transmission de véhicule, le dispositif comprenant :
- un support apte à se déplacer en rotation autour d'un axe, et
- une pluralité de corps pendulaires,
le support comprenant au moins un passage apte à coopérer avec un système de fixation sur un élément du système de transmission, ledit passage étant situé angulairement entre deux corps pendulaires angulairement voisins, au moins lorsque le dispositif est au repos.

Selon l'invention, la fixation du support sur le système de transmission s'effectue ainsi en profitant de l'espace angulaire laissé libre entre deux corps pendulaires angulairement voisins. Il n'est en conséquence pas nécessaire de prévoir une extension radiale du support en deça ou au-delà des corps pendulaires pour prévoir une fixation du dispositif au système de transmission via cette extension radiale du support.

L'invention permet ainsi d'utiliser au mieux la surface du support. On obtient alors un dispositif d'amortissement d'oscillations de torsion dont la dimension radiale permet une implantation dans différents endroits du système de transmission, par exemple sur un couvercle d'embrayage. L'implantation du dispositif d'amortissement d'oscillations de torsion est ainsi possible dans un espace restreint. En outre, cette implantation n'affecte pas les performances de filtrage et la tenue mécanique de ce dispositif d'amortissement.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « solidaire » signifie « rigidement couplé »,
- la position de repos du dispositif est celle dans laquelle les corps pendulaires sont soumis à une force centrifuge, mais non à des oscillations de torsion provenant des acyclismes du moteur thermique,
- « le passage est situé angulairement entre deux corps pendulaires angulairement voisins, au moins lorsque le dispositif est au repos » signifie qu'au moins dans la position de repos du dispositif, il existe, dans un plan perpendiculaire à l'axe de rotation du support, un rayon correspondant à un cercle qui coupe deux corps pendulaires angulairement voisins et qui coupe le passage entre ces deux corps pendulaires.

Le support peut être unique et il peut être réalisé d'une seule pièce. Le support est par exemple une tôle creuse. Le support peut s'étendre exclusivement entre un bord radialement intérieur sensiblement circulaire et un bord radialement extérieur sensiblement circulaire, les fonctions de guidage du déplacement des corps pendulaires et de fixation sur le système de transmission étant alors concentrées dans l'espace défini entre les bords précités du support.

Le passage peut être situé en permanence angulairement entre deux corps pendulaires angulairement voisins, c'est-à-dire pour toute position des corps pendulaires du dispositif. Cela signifie que, pour toute position de deux corps pendulaires angulairement voisins, il existe, dans un plan perpendiculaire à l'axe de rotation, un rayon définissant un cercle qui coupe ces corps pendulaires et le passage entre ces derniers.

Chaque corps pendulaire peut comprendre :
- une première et une deuxième masses pendulaires espacées axialement l'une par rapport à l'autre et mobiles par rapport au support, la première masse pendulaire étant disposée axialement d'un premier côté du support, et la deuxième masse pendulaire étant disposée axialement d'un deuxième côté du support, et
- au moins un organe de liaison de la première et de la deuxième masses pendulaires appariant lesdites masses.

Le dispositif peut comprendre au moins un organe de roulement coopérant d'une part avec une piste de roulement solidaire du support, et d'autre part avec au moins une piste de roulement solidaire du corps pendulaire, pour guider le déplacement du corps pendulaire par rapport au support.

L'organe de roulement peut coopérer avec la piste de roulement solidaire du support et avec la piste de roulement solidaire du corps pendulaire uniquement via sa surface extérieure. Ainsi, une même portion de cette surface extérieure peut coopérer alternativement avec la piste de roulement solidaire du support et avec la piste de roulement solidaire du corps pendulaire lorsque l'organe de roulement se déplace.

L'organe de liaison peut être disposé dans une fenêtre ménagée dans le support et il peut exister alors, dans un plan perpendiculaire à l'axe de rotation du support, un rayon définissant un cercle qui coupe à la fois la fenêtre et le passage permettant la fixation du support sur le système de transmission.

Selon un exemple de mise en œuvre de l'invention, la piste de roulement solidaire du corps pendulaire est définie par l'organe de liaison. Autrement dit, l'organe de roulement coopère d'une part avec le support, et d'autre part avec l'organe de liaison, pour guider le déplacement du corps pendulaire par rapport au support. Selon cet exemple, une seule et même fenêtre ménagée dans le support accueille une partie de l'organe de liaison et présente un bord dont une partie définit la piste de roulement solidaire du support. Chaque organe de roulement peut être uniquement sollicité en compression entre les pistes de roulement mentionnées ci-dessus. La piste de roulement solidaire du support et la piste de roulement solidaire du corps pendulaire et coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon un autre exemple de mise en œuvre de l'invention, le corps pendulaire peut définir deux pistes de roulement distinctes, une piste de roulement étant définie dans la première masse pendulaire et une piste de roulement étant définie dans la deuxième masse pendulaire. La première et la deuxième masse pendulaire présentent par exemple une cavité recevant l'organe de roulement et une partie du bord de cette cavité forme la piste de roulement correspondante. La portion de l'organe de roulement disposée axialement entre la première et la deuxième masse pendulaire est reçue dans une cavité du support, cette cavité étant distincte de la fenêtre dans laquelle l'organe de liaison est reçu.

L'organe de roulement peut alors comprendre successivement :
- une portion disposée dans une cavité de la première masse pendulaire et coopérant avec la piste de roulement formée par une partie du bord de cette cavité,
- une portion disposée dans une cavité du support et coopérant avec la piste de roulement formée par une partie du bord de cette cavité, et
- une portion disposée dans une cavité de la deuxième masse pendulaire et coopérant avec la piste de roulement formée par une partie du bord de cette cavité.

Dans tout ce qui précède, le dispositif est configuré de manière à ce que les corps pendulaires angulairement voisins ne viennent jamais en contact l'un avec l'autre, de manière à laisser libre entre eux la zone du support dans laquelle le passage est ménagé.

Le cas échéant, les faces latérales de chaque masse pendulaire peuvent présenter une forme garantissant l'existence de cette zone laissée libre. Des dégagements sont par exemple ménagés sur ces faces latérales.

Chaque corps pendulaire peut être muni d'un ou plusieurs organes d'amortissement de butée, permettant de réduire les chocs entre le corps pendulaire et le support à l'issue d'un déplacement du corps pendulaire depuis la position de repos et/ou en cas de chute radiale du corps pendulaire, par exemple lors de l'arrêt du moteur thermique du véhicule.

Chaque organe d'amortissement de butée est par exemple disposé radialement entre le bord radialement intérieur de l'organe de liaison et le bord radialement intérieur de la fenêtre.

Dans un exemple particulier de mise en œuvre de l'invention, chaque corps pendulaire comprend deux organes de liaison, chaque organe de liaison coopère avec un organe de roulement, et chaque organe de liaison est associé à un organe d'amortissement de butée.

Chaque organe d'amortissement de butée peut présenter des propriétés élastiques permettant l'amortissement des chocs liés à la venue en contact du corps pendulaire et du support. Chaque organe d'amortissement de butée est par exemple réalisé en élastomère ou en caoutchouc.

Des fenêtres distinctes du support peuvent alors être associées à un même corps pendulaire, chaque fenêtre recevant l'un des organes de liaison et l'organe de roulement associé.

Dans tout ce qui précède, une pièce d'interposition, encore appelée « patin », peut être prévue pour s'interposer axialement entre le support et les masses pendulaires, de manière à éviter les chocs axiaux entre ces derniers.

Dans tout ce qui précède, chaque organe de roulement est par exemple un rouleau de section circulaire dans un plan perpendiculaire à l'axe de rotation du support. Les extrémités axiales du rouleau peuvent être dépourvues de rebord annulaire fin. Le rouleau est par exemple réalisé en acier. Le rouleau peut être creux ou plein.

Dans tout ce qui précède, la forme des pistes de roulement peut être telle que les corps pendulaires soient uniquement déplacés par rapport au support en translation autour d'un axe fictif parallèle à l'axe de rotation du support.

En variante, la forme des pistes de roulement peut être telle que les corps pendulaires soient déplacés par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple plusieurs corps pendulaires, par exemple un nombre compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le dispositif peut être configuré de manière à ce que chaque corps pendulaire soit accordé à une valeur d'ordre choisie de manière à ce que le rapport entre cette valeur d'ordre et l'ordre d'excitation du moteur thermique du véhicule soit supérieur à 1,1. Par exemple, dans le cas d'un moteur thermique à six cylindres, l'ordre d'excitation de ce moteur est de 3, ce qui fait que les corps pendulaires sont accordés à une valeur d'ordre supérieure à 3,3.

Chaque corps pendulaire est alors accordé à une valeur d'ordre supérieure, notamment légèrement supérieure, à l'ordre d'excitation du moteur thermique.

Lorsque le dispositif d'amortissement d'oscillations de torsion est disposé dans la chaîne de propulsion directement en aval du moteur thermique, c'est-à-dire sans moyen d'amortissement interposé entre le vilebrequin et le support du dispositif d'amortissement d'oscillations de torsion, les corps pendulaires sont dans un environnement hostile dans lequel ils sont soumis à des oscillations de torsion d'intensité très importante. Un accord à une telle valeur d'ordre de ces corps pendulaires leur permet de supporter ces oscillations de torsion sans qu'il soit pour ce faire nécessaire de les surdimensionner.

Dans tout ce qui précède, l'accord des corps pendulaires à la valeur d'ordre mentionnée ci-dessus peut être obtenu en agissant sur tout ou partie des paramètres suivants :
- forme de la piste de roulement solidaire du corps pendulaire, cette piste étant notamment définie par l'organe de liaison,
- forme de la piste de roulement solidaire du support, cette piste étant notamment définie par une partie du bord de la fenêtre recevant l'organe de liaison,
- inertie du corps pendulaire,
- distance, lorsque le dispositif est au repos, entre le centre de gravité du corps pendulaire et l'axe de rotation du support,
- distance, lorsque le dispositif est au repos, entre le centre de gravité du corps pendulaire et le point d'accrochage du corps pendulaire sur le support, et
- forme des organes de roulement.

Chaque corps pendulaire peut notamment être configuré pour être accordé à une valeur d'ordre choisie de manière à ce que le rapport entre cette valeur d'ordre et l'ordre d'excitation du moteur thermique du véhicule soit supérieur à 1,1 et inférieur à la valeur de ce rapport correspondant à la valeur d'ordre à partir de laquelle le graphe représentant le ratio entre l'amplitude des oscillations de torsion en sortie du dispositif d'amortissement et l'amplitude de ces oscillations en entrée dudit dispositif, ie la performance de filtrage de ce dispositif, en fonction de la valeur d'ordre des corps pendulaires, atteint un plateau. Le graphe mentionné ci-dessus devient alors sensiblement horizontal. Une telle plage de valeurs d'ordre permet de disposer d'un dispositif pendulaire capable d'endurer les oscillations de torsion directement issues du moteur thermique, car présentant un débattement depuis leur position de repos tel que leur venue en butée contre le support ne se produise pas de façon excessive, et assurant par ailleurs un filtrage satisfaisant de ces oscillations de torsion. Ainsi, le fait de désaccorder les corps pendulaires de l'ordre d'excitation du moteur thermique, si cela conduit à une légère dégradation des performances de filtrage, leur permet d'être utilisés directement en aval du moteur thermique du véhicule. La plage de valeurs ci-dessus assure ainsi un meilleur compromis.

Dans le cas d'un moteur thermique à six cylindres, chaque corps pendulaire est par exemple configuré pour être accordé à une valeur d'ordre comprise entre 3,3 et 3,5, étant notamment égale à 3,4.

L'invention a encore pour objet, selon un autre de ses aspects, un composant pour système de transmission de véhicule, comprenant :
- un élément apte à être solidarisé au vilebrequin du moteur thermique du véhicule,
- un dispositif tel que défini ci-dessus, et
- un système de fixation du support du dispositif d'amortissement d'oscillations de torsion sur l'élément.

Autrement dit, selon cet autre aspect de l'invention, le dispositif d'amortissement d'oscillations de torsion est fixé sur le primaire du système de transmission, « primaire » signifiant « solidaire du vilebrequin du moteur thermique ».

Dans le cas où le système de transmission est un double volant amortisseur, le dispositif est ainsi solidaire du volant primaire.

Le dispositif peut encore être utilisé avec un double embrayage à sec ou humide.

Le système de fixation peut comprendre une douille fixée, notamment soudée, sur l'élément et une vis reçue dans la douille, et immobilisant le support par rapport à l'élément.

Ce système de fixation est ainsi différent d'un rivetage, permettant un montage et un démontage aisés du dispositif sur cet élément du système de transmission.

La vis peut être directement au contact du support du dispositif lorsque le support et l'élément sont fixés. La tête de la vis vient par exemple en appui contre une face du support. Le support est ainsi immobilisé, en étant axialement en appui direct contre la tête de la vis d'une part et la douille d'autre part.

La douille peut être disposée en partie dans l'épaisseur de l'élément lorsque le support et l'élément sont fixés.

La douille peut définir intérieurement un logement fileté avec lequel vient coopérer la vis pour immobiliser le support par rapport à l'élément. Lorsqu'elle est en place dans la douille, la vis peut présenter une portion reçue dans l'épaisseur de l'élément, sans toutefois coopérer fonctionnellement avec cette partie de l'élément. La vis fait par exemple saillie selon une portion d'extrémité dans une ouverture de l'élément dont la dimension est supérieure à la dimension correspondante de la vis, de sorte qu'il n'y a alors pas de contact entre l'ouverture de l'élément et cette portion d'extrémité de la vis.

A l'exception de sa tête, la vis peut présenter une forme cylindrique, et la surface extérieure de la douille peut être définie par un cylindre.

En variante, la surface extérieure de la douille est définie par deux cylindres creux de même axe et qui se succèdent le long de cet axe. Ces cylindres présentent des rayons différents d'un cylindre à l'autre. Le cylindre de rayon le plus faible est par exemple disposé dans une partie de l'épaisseur de l'élément et le cylindre de rayon le plus important est alors celui dans lequel est ménagé le logement fileté. Le logement fileté peut se prolonger alors par un logement non fileté ménagé dans le cylindre de rayon le plus faible.

L'élément sur lequel est fixé le dispositif d'amortissement peut être un couvercle d'embrayage. Le dispositif d'amortissement d'oscillations de torsion peut alors être fixé sur le couvercle, tout en étant à l'extérieur de celui-ci. Un tel emplacement du dispositif permet de monter ou démonter ce dernier sans avoir à monter ou démonter également une partie de l'embrayage. En outre, ce positionnement du dispositif d'amortissement d'oscillations de torsion peut permettre de ne pas modifier le couvercle selon l'art antérieur.

En variante, cet élément sur lequel est fixé le dispositif d'amortissement pourrait être un boîtier de convertisseur de couple hydrodynamique.

Dans tout ce qui précède, le système de fixation peut coopérer avec une portion de l'élément, notamment du couvercle, qui s'étend perpendiculairement à l'axe de rotation du support. Cette portion de l'élément peut être la portion de cet élément, notamment du couvercle, la plus éloignée axialement du vilebrequin du moteur thermique. Dans tout ce qui précède, le composant peut comprendre un actionneur apte à modifier l'état du système de transmission, et le dispositif d'amortissement d'oscillations de torsion peut s'étendre radialement extérieurement autour de cet actionneur. Le support du dispositif peut ainsi entourer l'actionneur. Un tel actionneur est supposé avoir plusieurs états : un état dans lequel il permet la transmission d'un mouvement au sein du système de transmission, c'est-à-dire qu'il est dans l'état embrayé, et un état dans lequel cette transmission ne s'effectue pas, c'est-à-dire qu'il est dans l'état débrayé. Une source d'énergie peut alors permettre de maintenir l'actionneur dans l'un au moins de ces états et le passage de l'un à l'autre de ces états. L'actionneur est notamment un actionneur mettant en œuvre une source d'énergie pneumatique.

Le composant est notamment l'un d'un double volant amortisseur, d'un convertisseur de couple hydrodynamique et d'un disque de friction. Le composant est notamment destiné à être intégré à un véhicule poids industriel, tel que défini précédemment.

L'invention a encore pour objet, selon un autre de ses aspects, un composant pour système de transmission de véhicule, comprenant :
- un élément apte à être solidarisé au vilebrequin d'un moteur thermique du véhicule,
- un dispositif d'amortissement d'oscillations de torsion comprenant un support solidaire de l'élément, et au moins un corps pendulaire mobile par rapport au support,
le corps pendulaire étant configuré pour être accordé à une valeur d'ordre choisie de manière à ce que le rapport entre cette valeur d'ordre et l'ordre d'excitation du moteur thermique soit supérieur à 1,1.

Tout ou partie des caractéristiques mentionnées précédemment s'applique à cet autre aspect de l'invention.

L'invention a encore pour objet, selon un autre de ses aspects, un composant pour système de transmission de véhicule, comprenant :
- un élément apte à se déplacer en rotation autour d'un axe,
- un dispositif d'amortissement d'oscillations de torsion comprenant :
   - un support, et
   - au moins un corps pendulaire comprenant une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses,
      et
- un système de fixation du support du dispositif d'amortissement d'oscillations de torsion sur l'élément, le système de fixation comprenant une douille fixée sur l'élément et une vis reçue dans la douille et immobilisant le support par rapport à l'élément.

L'élément est de préférence apte à être solidarisé au vilebrequin du moteur thermique du véhicule, étant notamment un couvercle d'embrayage.

Tout ou partie des caractéristiques mentionnées ci-dessus, et notamment celles relatives à la douille et la vis, s'applique à cet autre aspect de l'invention.

L'invention a encore pour objet, selon un autre de ses aspects, une chaîne de propulsion de véhicule, notamment de véhicule dit industriel, comprenant :
- un moteur thermique, et
- un système de transmission comprenant un composant tel que défini ci-dessus

L'invention pourra être mieux comprise à la lecture de la description qui va suivre d'un exemple non limitatif de mise en œuvre de celle-ci et à l'examen du dessin annexé sur lequel :
- la figure 1 représente un embrayage intégrant un dispositif d'amortissement d'oscillations de torsion selon un exemple de mise en œuvre de l'invention,
- la figure 2 est une vue partielle d'une coupe selon II-II de l'embrayage de la figure 1,
- la figure 3 est une vue partielle d'une coupe selon III-III de l'embrayage de la figure 1,
- la figure 4 est une vue schématique du dispositif d'amortissement d'oscillations de torsion de la figure 1, représenté de façon isolée,
- la figure 5 représente un détail d'un corps pendulaire du dispositif d'amortissement d'oscillations de torsion de la figure 4, et
- la figure 6 contient deux graphes représentant respectivement le filtrage effectué par un dispositif d'amortissement d'oscillations de torsion en fonction de la valeur d'ordre à laquelle les corps pendulaires sont accordés, et le débattement des corps pendulaires de ce dispositif en fonction de cette valeur d'ordre.

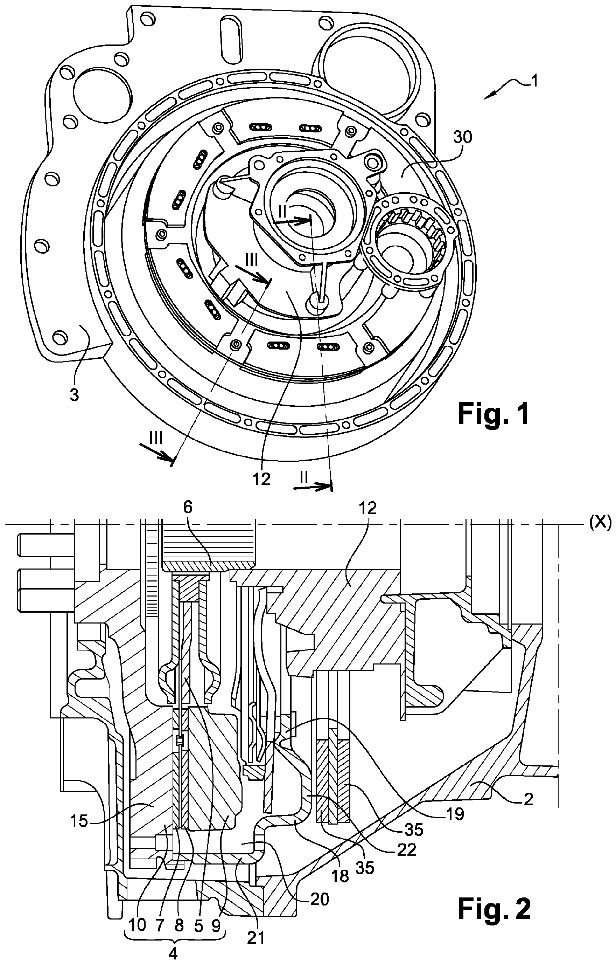

On a représenté sur la figure 1 un embrayage 1 pour véhicule industriel, tel qu'un poids lourd. Sur la figure 1, le carter 2 de la boîte de vitesses, qui est visible sur la figure 2, n'est pas représenté, pour des raisons de clarté du dessin, contrairement au carter 3 du moteur thermique du véhicule qui est visible sur cette figure 1. Le moteur thermique est dans l'exemple considéré un moteur à six cylindres.

L'embrayage 1 comprend de façon connue un disque d'embrayage 4 d'axe X, comprenant un flasque 5 solidaire d'un moyeu de sortie 6. Un support 7 de garnitures de friction 8 est fixé sur le flasque 5.

Le disque d'embrayage 4 comprend encore un plateau de pression 9 déplacé par un actionneur 12 qui est ici un actionneur pneumatique, et un plateau de réaction 10, qui est ici formé par une partie d'un volant primaire 15. Le volant primaire 15 est solidaire du vilebrequin du moteur thermique.

Un couvercle d'embrayage 18 est prévu. Le couvercle 18 est solidarisé au volant primaire 15 via des rivets 20 répartis sur la périphérie de ce couvercle 18.

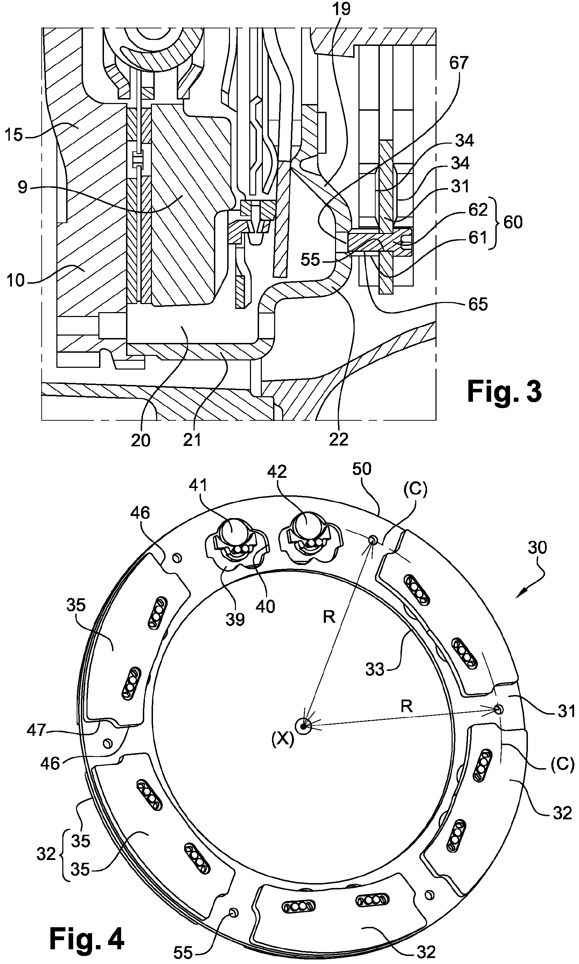

Comme on peut le voir sur les figures 2 et 3, le couvercle 18 comprend une partie 19 s'étendant essentiellement radialement et une partie 21 s'étendant axialement. La partie 19 s'étendant essentiellement radialement est ici formée par plusieurs portions décalées axialement. Parmi celles-ci, l'une d'entre elles 22 est la plus axialement éloignée du vilebrequin et du volant primaire 15.

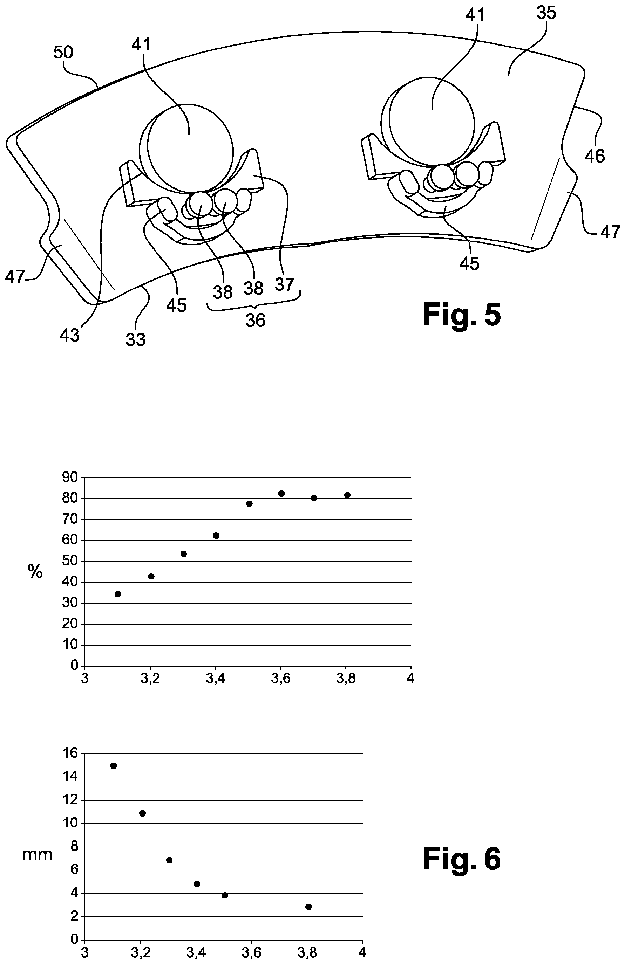

Cette portion 22 du couvercle 18 porte dans l'exemple considéré un dispositif d'amortissement d'oscillations de torsion 30 qui va maintenant être décrit en référence aux figures 4 et 5.

Le dispositif 30 comprend dans l'exemple considéré:
- un support 31 apte à se déplacer en rotation autour de l'axe X de l'embrayage 1, et
- une pluralité de corps pendulaires 32 mobiles par rapport au support 31.

Dans l'exemple considéré, six corps pendulaires 32 sont prévus, étant répartis de façon uniforme sur le pourtour de l'axe X.

Dans l'exemple considéré, le support 31 présente globalement une forme d'anneau.

Le support 31 s'étend ici radialement entre un bord radialement intérieur 33 et un bord radialement extérieur 50 qui sont ici circulaires. Le support 31 s'étend dans l'exemple décrit exclusivement entre ces deux bords 33 et 50.

Le support 31 comprend encore deux côtés opposés axialement 34 qui sont ici des faces planes.

Comme on peut notamment le voir sur la figure 4, chaque corps pendulaire 32 comprend dans l'exemple considéré :
- deux masses pendulaires 35, chaque masse pendulaire 35 s'étendant axialement en regard d'un côté 34 du support 31, et
- deux organes de liaison 36 solidarisant les deux masses pendulaires 35 d'un même corps.

Sur la figure 4, l'une des masses pendulaires d'un des corps pendulaires 32 n'est pas représentée, pour des raisons de clarté du dessin.

Les organes de liaison 36, encore appelés « entretoises », sont dans l'exemple considéré décalés angulairement. Comme représenté sur la figure 5, chaque organe de liaison 36 peut comprendre un tronc 37 interposé axialement entre les deux masses pendulaires 35, et un ou plusieurs rivets 38 disposés à travers ce tronc 37 dans des trous respectifs et fixés à leur extrémité à chaque masse pendulaire 35.

Dans une variante non représentée, chaque organe de liaison est réalisé d'une seule pièce, étant par exemple emmanché à force dans chaque masse pendulaire 35.

Chaque organe de liaison 36 s'étend en partie dans une fenêtre 39 ménagée dans le support et visible sur la figure 4. Dans l'exemple considéré, la fenêtre 39 définit un espace vide à l'intérieur du support 31, cette fenêtre 39 étant délimitée par un contour fermé 40. Toujours dans l'exemple considéré, chaque fenêtre 39 ne reçoit qu'un seul organe de liaison 36.

Le dispositif 1 comprend encore dans l'exemple considéré des organes de roulement 41 guidant le déplacement des corps pendulaires 32 par rapport au support 31. Les organes de roulement 41 sont ici des rouleaux dont au moins une portion présente une section transversale circulaire.

Dans l'exemple décrit, le mouvement par rapport au support 31 de chaque corps pendulaire 32 est guidé par deux organes de roulement 41, chacun d'entre eux coopérant avec l'un des organes de liaison 36 du corps pendulaire 32.

Chaque organe de roulement 41 coopère d'une part avec une piste de roulement 42 définie par le support 31, et qui est ici formée par une partie du contour 40 de la fenêtre 39, et d'autre part avec une piste de roulement 43 définie par le corps pendulaire 32, et qui est ici formée par une partie du contour extérieur du tronc 37 de l'organe de liaison 36.

Plus précisément, chaque organe de roulement 41 interagit au niveau radialement intérieur avec la piste de roulement 43 et au niveau radialement extérieur avec la piste de roulement 42 lors de son déplacement par rapport au support 31 et au corps pendulaire 32, étant par exemple uniquement sollicité en compression entre les pistes de roulement 42 et 43. Comme représenté par exemple sur la figure 4, les pistes de roulement 42 et 43 présentent dans l'exemple décrit des portions radialement en regard l'une de l'autre.

Dans l'exemple considéré, le dispositif 30 comprend des organes d'amortissement de butée 45. Chaque organe d'amortissement de butée 45 est ici interposé radialement entre un organe de liaison 36 et le bord radialement intérieur de la fenêtre 39 dans laquelle cet organe de liaison 36 est reçu.

Chaque organe d'amortissement de butée 45 présente par exemple des pions axiaux reçus dans des trous correspondants de chaque masse pendulaire 35 d'un corps pendulaire 32, de manière à permettre de solidariser cet organe d'amortissement de butée 45 au corps pendulaire 32. Chaque organe d'amortissement de butée 45 est par exemple en élastomère ou en caoutchouc.

Comme on peut le voir sur la figure 4 notamment, des dégagements 46 sont ménagés dans chaque face latérale 47 d'une masse pendulaire 35, c'est-à-dire dans chaque face angulairement en regard du corps pendulaire 32 voisin.

Ces dégagements, et le cas échéant, la forme des pistes de roulement 42 et 43, permet de ménager une zone libre dans le support 31 angulairement entre deux corps pendulaires 32 angulairement voisins. On parle de zone libre pour indiquer que, quelle que soit la position occupée par ces corps pendulaires 32 angulairement voisins lors de leur débattement, ces corps pendulaires 32 ne viennent jamais occuper cette zone.

Comme on peut le voir sur les figures 3 et 4, un passage 55 est ménagé dans cette zone libre. Ce passage 55 permet la fixation du support 31, et donc du dispositif d'amortissement d'oscillations de torsion 30, sur la portion 22 du couvercle 18.

Dans l'exemple considéré, six passages 55 sont ménagés dans le support 31, et chacun de ces passages est ménagé dans une zone libre entre deux corps pendulaires 32 angulairement voisins.

Comme représenté sur la figure 4, il existe, dans un plan perpendiculaire à l'axe X de l'embrayage 1, un rayon R correspondant à un cercle C qui coupe à la fois les passages 55 et les fenêtres 39 ménagées dans le support 31.

Un système de fixation 60, visible sur la figure 3, permet d'immobiliser le support 31 par rapport au couvercle 18. Le système de fixation 60 comprend dans l'exemple considéré une douille 61 soudée sur la portion 22 du couvercle 18, et une vis 62 reçue dans la douille 61 et immobilisant le support 31 par rapport au couvercle 18.

La douille 61 est dans l'exemple considéré creuse et elle présente une surface extérieure définie par deux cylindres se succédant axialement et de rayons différents d'un cylindre à l'autre. Le cylindre de rayon le plus faible est soudé dans une ouverture 67 ménagée dans la portion 22 du couvercle. La douille 61 présente un logement intérieur 65 traversant, dont la paroi intérieure est filetée au niveau du cylindre de plus grand rayon. La vis 62 est reçue dans ce logement intérieur 65 et présente une portion d'extrémité qui est reçue sans contact dans l'ouverture 67 ménagée dans la portion 22 du couvercle 18.

Comme représenté sur la figure 3, lorsque la vis 62 est en place dans la douille 61, la tête de cette vis 62 vient appuyer directement sur le support 31 pour immobiliser ce dernier contre la douille 61.

Le dispositif 30 est dans l'exemple considéré configuré de manière à ce que chaque corps pendulaire 32 soit accordé à une valeur d'ordre supérieure à l'ordre d'excitation du moteur thermique du véhicule. Plus précisément, cette valeur d'ordre peut être choisie de manière à ce que le rapport entre cette valeur d'ordre et l'ordre d'excitation du moteur thermique du véhicule soit supérieur à 1,1. Dans le cas présent, avec un moteur à six cylindres, l'ordre d'excitation du moteur thermique est égal à trois, ce qui signifie que les corps pendulaires 32 sont accordés à une valeur d'ordre supérieure ou égale à 3,3.

Pour obtenir une telle valeur d'ordre pour les corps pendulaires 32, on agit par exemple sur l'un au moins des paramètres suivants :
- forme de la piste de roulement 43 définie par l'organe de liaison 36,
- forme de la piste de roulement 42 définie par une partie du bord 40 de la fenêtre 39 recevant l'organe de liaison 36,
- inertie du corps pendulaire 32,
- distance, lorsque le dispositif 30 est au repos, entre le centre de gravité du corps pendulaire 32 et l'axe de rotation X du support 31,
- distance, lorsque le dispositif 30 est au repos, entre le centre de gravité du corps pendulaire 32 et le point d'accrochage du corps pendulaire 32 sur le support 31, et
- forme des organes de roulement 41.

Les graphes de la figure 6 représentent pour une vitesse de 800 rpm avec un moteur à six cylindres, respectivement:
- le ratio entre l'amplitude des oscillations de torsion en sortie du dispositif 30 et l'amplitude de ces oscillations en entrée du dispositif 30, c'est-à-dire la part non filtrée par le dispositif 30 de ces oscillations de torsion, en fonction de la valeur d'ordre à laquelle sont accordés les corps pendulaires 32, et
- le débattement du centre de gravité de ces corps pendulaires 32 à partir de leur position de repos, lorsqu'ils filtrent les oscillations de torsion en fonction de la valeur d'ordre à laquelle sont accordés les corps pendulaires 32.

Les graphes de la figure 6 permettent ainsi d'illustrer l'influence de la valeur d'ordre à laquelle sont accordés les corps pendulaires 32 sur :
- le filtrage des oscillations de torsion causées par les acyclismes du moteur thermique directement perçues par les corps pendulaires 32, et
- le comportement des corps pendulaires 32 du fait de ces oscillations de torsion.

On constate en observant les graphes de la figure 6 que, lorsque l'on augmente la valeur d'ordre à laquelle sont accordés les corps pendulaires 32 à partir de l'ordre d'excitation du moteur thermique, on dégrade de façon légère la performance de filtrage des oscillations de torsion, tout en diminuant le débattement auquel sont soumis ces corps pendulaires 32.

Lorsque les corps pendulaires 32 sont accordés à une valeur supérieure à 1,1 fois l'ordre d'excitation du moteur thermique du véhicule, c'est-à-dire à partir d'une valeur d'ordre de 3,3 dans l'exemple considéré, on constate que l'on a considérablement réduit le débattement auquel ces corps pendulaires sont soumis, et ainsi le risque que ces derniers ne viennent en saturation.

En se plaçant par exemple à une valeur de 3,4 pour l'ordre des corps pendulaires 32, on constate que 40% de l'amplitude des oscillations de torsion est filtrée par le dispositif 30, alors que le débattement du centre de gravité de ces derniers depuis la position de repos est réduit à 5 mm environ. Ainsi, les risques de dégradation des corps pendulaires 32 liés au fait que le support 31 soit solidaire du vilebrequin sont considérablement réduits, et le filtrage apporté par ces corps 32 pour cette valeur d'ordre de 3,4 est déjà satisfaisant.

Dans un exemple concret, le dispositif d'amortissement d'oscillations de torsion 30 présente les paramètres suivants :
- nombre de corps pendulaires : 6,
- masse totale de ces corps pendulaires : 7 kg
- diamètre des organes de roulement : 25 mm
- épaisseur, ie dimension axiale, du support : 6 mm
- épaisseur, ie dimension axiale, de chaque masse pendulaire : 8.8 mm
- moment d'inertie du dispositif d'amortissement d'oscillations de torsion : 0,33 kg.m².

Pour obtenir une valeur d'ordre des corps pendulaires égale à 3,4 avec un débattement de 5 mm, le centre de gravité de chaque corps pendulaire 32 décrit par exemple par rapport au support un cercle de rayon 14,17 mm, et ce centre de gravité est alors, au repos, à une distance de l'axe de rotation X du support qui est égale à 178 mm.

L'invention n'est pas limitée à l'exemple qui vient d'être décrit.

L'invention n'est notamment pas limitée au cas où la piste de roulement 13 solidaire du corps pendulaire 3 est définie par l'organe de liaison 6.

Dans un exemple non représenté, les organes de liaison 36 et les pistes de roulement 42 et 43 sont autres. Les organes de liaison 36 sont alors des rivets, et chaque rivet 36 s'étend selon un axe qui est dans l'exemple considéré parallèle à l'axe de rotation X. Chaque organe de liaison 36 s'étend en partie dans une fenêtre 39 ménagée dans le support.

Selon cet exemple non représenté, chaque organe de roulement 41 coopère d'une part avec une piste de roulement 42 définie par le support 31, et qui est ici formée par une partie du bord d'une cavité ménagée dans le support 31 et distincte de la fenêtre 39, et d'autre part avec deux pistes de roulement 43 définies par le corps pendulaire 32. Chaque masse pendulaire 35 du corps pendulaire présente ici pour chaque organe de roulement 41 une cavité dont une partie du bord définit une piste de roulement 43.

Selon cet exemple, chaque organe de roulement 41 comprend successivement axialement:
- une portion disposée dans une cavité de la première masse pendulaire 35 et coopérant avec la piste de roulement 43 formée par une partie du bord de cette cavité,
- une portion disposée dans une cavité du support 31 et coopérant avec la piste de roulement 42 formée par une partie du bord de cette cavité, et
- une portion disposée dans une cavité de la deuxième masse pendulaire 35 et coopérant avec la piste de roulement 43 formée par une partie du bord de cette cavité.

## Revendications

1. Composant pour système de transmission de véhicule (1), comprenant :
- un élément (18) apte à être solidarisé au vilebrequin du moteur thermique,
- un dispositif (30) d'amortissement d'oscillations de torsion, le dispositif comprenant :
- un support (31) apte à se déplacer en rotation autour d'un axe (X), et
- une pluralité de corps pendulaire (32),
- un système de fixation (60) du support (31) du dispositif d'amortissement d'oscillations de torsion (30) sur l'élément (18),
le support (31) du dispositif d'amortissement d'oscillations de torsion comprenant au moins un passage (55) apte à coopérer avec le système de fixation (60), **caractérisé en ce que** ledit passage (55) est situé angulairement entre deux corps pendulaires (32) angulairement voisins, au moins lorsque le dispositif (30) est au repos, et **en ce que** le dispositif est configuré de manière à ce que les corps pendulaires angulairement voisins ne viennent jamais en contact l'un avec l'autre, de manière à laisser libre entre eux la zone du support dans laquelle le passage est ménagé.

2. Composant selon la revendication 1, chaque corps pendulaire (32) comprenant une première et une deuxième masses pendulaires (35) espacées axialement l'une par rapport à l'autre et mobiles par rapport au support (31), la première masse pendulaire (35) étant disposée axialement d'un premier côté (34) du support (31) et la deuxième masse pendulaire (35) étant disposée axialement d'un deuxième côté (34) du support (31), et au moins un organe de liaison (36) de la première et de la deuxième masses pendulaires (35) appariant lesdites masses.

3. Composant selon la revendication 1 ou 2, comprenant au moins un organe de roulement (41) coopérant d'une part avec une piste de roulement (42) solidaire du support (31), et d'autre part avec au moins une piste de roulement (43) solidaire du corps pendulaire (32) pour guider le déplacement du corps pendulaire (32) par rapport au support (31).

4. Composant selon les revendications 2 et 3, la piste de roulement (43) solidaire du corps pendulaire étant définie par l'organe de liaison (36).

5. Composant selon l'une quelconque des revendications précédentes, chaque corps pendulaire (32) étant configuré pour être accordé à une valeur d'ordre choisie de manière à ce que le rapport entre cette valeur d'ordre et l'ordre d'excitation du moteur thermique du véhicule soit supérieur à 1,1.

6. Composant selon la revendication 5, chaque corps pendulaire (32) étant configuré pour être accordé à une valeur d'ordre choisie de manière à ce que le rapport entre cette valeur d'ordre et l'ordre d'excitation du moteur thermique du véhicule soit supérieur à 1,1 et inférieur à la valeur de ce rapport correspondant à la valeur d'ordre à partir de laquelle le graphe représentant le ratio entre l'amplitude des oscillations de torsion en sortie du dispositif d'amortissement (30) et l'amplitude de ces oscillations en entrée dudit dispositif en fonction de la valeur d'ordre des corps pendulaires (32), atteint un plateau.

7. Composant selon l'une quelconque des revendications précédentes, le système de fixation (60) comprenant une douille (61) fixée sur l'élément (18), et une vis (62) reçue dans la douille (61) et immobilisant le support (31) par rapport à l'élément (18).

8. Composant selon la revendication 7, la vis (62) étant directement au contact du support (31) du dispositif (30).

9. Composant selon l'une quelconque des revendications précédentes, l'élément (18) étant un couvercle d'embrayage.

10. Composant selon l'une quelconque des revendications précédentes, le système de fixation (60) coopérant avec une portion (22) de l'élément (18) qui s'étend perpendiculairement à l'axe de rotation (X) du support (31).

11. Composant selon l'une quelconque des revendications précédentes, comprenant un actionneur (12), le dispositif d'amortissement d'oscillations de torsion (30) s'étendant radialement extérieurement autour de cet actionneur (12).

12. Composant selon l'une quelconque des revendications précédentes, étant l'un d'un double volant amortisseur, d'un convertisseur de couple hydrodynamique et d'un disque de friction.

13. Composant selon l'une quelconque des revendications précédentes, étant destiné à être intégré à un véhicule industriel.

## Patentansprüche

1. Komponente (1) für ein Kraftübertragungssystem eines Fahrzeugs, umfassend:
- ein Element (18), das mit der Kurbelwelle des Verbrennungsmotors fest verbindbar ist,
- eine Vorrichtung (30) zur Dämpfung von Torsionsschwingungen, wobei die Vorrichtung umfasst:
- einen Träger (31), der dafür ausgelegt ist, sich drehend um eine Achse (X) zu bewegen, und
- mehrere Pendelkörper (32),
- ein System zur Befestigung (60) des Trägers (31) der Vorrichtung (30) zur Dämpfung von Torsionsschwingungen am Element (18),
wobei der Träger (31) der Vorrichtung zur Dämpfung von Torsionsschwingungen wenigstens einen Durchlass (55) umfasst, der dafür ausgelegt ist, mit dem Befestigungssystem (60) zusammenzuwirken,
**dadurch gekennzeichnet, dass** sich der Durchlass (55) winkelmäßig zwischen zwei winkelmäßig benachbarten Pendelkörpern (32) befindet, wenigstens wenn sich die Vorrichtung (30) im Ruhezustand befindet,
und dadurch, dass die Vorrichtung derart ausgebildet ist, dass die winkelmäßig benachbarten Pendelkörper niemals miteinander in Kontakt kommen, so dass zwischen ihnen der Bereich des Trägers, in welchem der Durchlass ausgebildet ist, frei gelassen wird.

2. Komponente nach Anspruch 1, wobei jeder Pendelkörper (32) eine erste und eine zweite Pendelmasse (35), die axial voneinander beabstandet und beweglich in Bezug auf den Träger (31) sind, wobei die erste Pendelmasse (35) axial auf einer ersten Seite (34) des Trägers (31) angeordnet ist und die zweite Pendelmasse (35) axial auf einer zweiten Seite (34) des Trägers (31) angeordnet ist, und wenigstens ein Organ zur Verbindung (36) der ersten und der zweiten Pendelmasse (35), das diese Massen zu einem Paar verbindet, umfasst.

3. Komponente nach Anspruch 1 oder 2, welche wenigstens ein Wälzelement (41) umfasst, das einerseits mit einer Laufbahn (42) zusammenwirkt, die mit dem Träger (31) fest verbunden ist, und andererseits mit wenigstens einer Laufbahn (43), die mit dem Pendelkörper (32) fest verbunden ist, um die Verlagerung des Pendelkörpers (32) in Bezug auf den Träger (31) zu führen.

4. Komponente nach den Ansprüchen 2 und 3, wobei die Laufbahn (43), die mit dem Pendelkörper fest verbunden ist, durch das Verbindungsorgan (36) definiert ist.

5. Komponente nach einem der vorhergehenden Ansprüche, wobei jeder Pendelkörper (32) dafür ausgebildet ist, auf einen Ordnungswert abgestimmt zu werden, der so gewählt ist, dass das Verhältnis zwischen diesem Ordnungswert und der Anregungsordnung des Verbrennungsmotors des Fahrzeugs größer als 1,1 ist.

6. Komponente nach Anspruch 5, wobei jeder Pendelkörper (32) dafür ausgebildet ist, auf einen Ordnungswert abgestimmt zu werden, der so gewählt ist, dass das Verhältnis zwischen diesem Ordnungswert und der Anregungsordnung des Verbrennungsmotors des Fahrzeugs größer als 1,1 ist, und kleiner als der Wert dieses Verhältnisses, der dem Ordnungswert entspricht, von dem ab der Graph, der das Verhältnis zwischen der Amplitude der Torsionsschwingungen am Ausgang der Dämpfungsvorrichtung (30) und der Amplitude dieser Schwingungen am Eingang der Vorrichtung als Funktion des Ordnungswertes der Pendelkörper (32) darstellt, ein Plateau erreicht.

7. Komponente nach einem der vorhergehenden Ansprüche, wobei das Befestigungssystem (60) eine Hülse (61), die an dem Element (18) befestigt ist, und eine Schraube (62), die in der Hülse (61) aufgenommen ist und den Träger (31) in Bezug auf das Element (18) arretiert, umfasst.

8. Komponente nach Anspruch 7, wobei sich die Schraube (62) direkt in Kontakt mit dem Träger (31) der Vorrichtung (30) befindet.

9. Komponente nach einem der vorhergehenden Ansprüche, wobei das Element (18) ein Kupplungsdeckel ist.

10. Komponente nach einem der vorhergehenden Ansprüche, wobei das Befestigungssystem (60) mit einem Abschnitt (22) des Elements (18) zusammenwirkt, welcher sich senkrecht zur Drehachse (X) des Trägers (31) erstreckt.

11. Komponente nach einem der vorhergehenden Ansprüche, welche einen Aktuator (12) umfasst, wobei sich die Vorrichtung zur Dämpfung von Torsionsschwingungen (30) radial außen um diesen Aktuator (12) herum erstreckt.

12. Komponente nach einem der vorhergehenden Ansprüche, welche eines von einem Zweimassenschwungrad, einem hydrodynamischen Drehmomentwandler und einer Reibscheibe ist.

13. Komponente nach einem der vorhergehenden Ansprüche, welche dazu bestimmt ist, in ein Nutzfahrzeug eingebaut zu werden.

## Claims

1. Component for a vehicle transmission system (1), comprising:
- an element (18) able to be secured to the crankshaft of the combustion engine,
- a torsional-oscillations damping device (30), the device comprising:
- a support (31) able to move in rotation about an axis (X), and
- a plurality of pendulum bodies (32),
- a fixing system (60) for fixing the support (31) of the torsional-oscillations damping device (30) to the element (18),
the support (31) of the torsional-oscillations damping device comprising at least one passage (55) able to collaborate with the fixing system (60), **characterized in that** the said passage (55) is situated angularly between two pendulum bodies (32) that are angularly adjacent, at least when the device (30) is at rest, and **in that** the device is configured in such a way that angularly adjacent pendulum bodies never come into contact with one another, so as to leave free between them the zone of the support in which the passage is formed.

2. Component according to Claim 1, each pendulum body (32) comprising a first and second pendulum mass (35), these being spaced axially apart and able to move with respect to the support (31), the first pendulum mass (35) being positioned axially on a first side (34) of the support (31), and the second pendulum mass (35) being positioned axially on a second side (34) of the support (31), and at least one connecting member (36) connecting the first and second pendulum masses (35) to pair the said masses.

3. Component according to Claim 1 or 2, comprising at least one rolling member (41) collaborating on the one hand with a raceway (42) secured to the support (31) and, on the other hand, with at least one raceway (43) secured to the pendulum body (32) to guide the movement of the pendulum body (32) with respect to the support (31).

4. Component according to Claims 2 and 3, the raceway (43) secured to the pendulum body being defined by the connecting member (36).

5. Component according to any one of the preceding claims, each pendulum body (32) being configured to be tuned to a value of an order chosen so that the ratio between this order value and the excitation order of the combustion engine of the vehicle is greater than 1.1.

6. Component according to Claim 5, each pendulum body (32) being configured to be tuned to a value of an order chosen so that the ratio between this order value and the excitation order of the combustion engine of the vehicle is greater than 1.1 and less than the value of this ratio corresponding to the order value from which the graph representing the ratio between the amplitude of the torsional oscillations on the output side of the damping device (30) and the amplitude of these oscillations on the input side of the said device as a function of the order value of the pendulum bodies (32) begins to plateau.

7. Component according to any one of the preceding claims, the fixing system (60) comprising a socket (61) fixed to the element (18), and a screw (62) housed in the socket (61) and immobilizing the support (31) with respect to the element (18).

8. Component according to Claim 7, the screw (62) being directly in contact with the support (31) of the device (30) .

9. Component according to any one of the preceding claims, the element (18) being a clutch cover.

10. Component according to any one of the preceding claims, the fixing system (60) collaborating with a portion (22) of the element (18) which extends perpendicular to the axis of rotation (X) of the support (31).

11. Component according to any one of the preceding claims, comprising an actuator (12), the torsional-oscillations damping device (30) extending radially externally around this actuator (12).

12. Component according to any one of the preceding claims, being one of: a dual-mass flywheel, a hydrodynamic torque converter, and a friction disc.

13. Component according to any one of the preceding claims, being intended to be incorporated into an industrial vehicle.
